# EUROPEAN PATENT SPECIFICATION

(11) **EP 2 909 551 B1**
(45) Date of publication and mention of the grant of the patent: **13.05.2020**
(21) Application number: 13823999.1
(22) Date of filing: 18.10.2013
(51) Int. Cl.: F27B 1/00, F27D 3/00, F27D 7/02, F28C 3/14, B22F 9/16, C03B 3/02, C21B 13/14

(54) **GAS DISTRIBUTOR FOR USE IN A HEATING APPARATUS**
GASVERTEILER FÜR DEN EINSATZ IN EINER ERWÄRMUNGSVORRICHTUNG
DISTRIBUTEUR DE GAZ À UTILISER DANS UN APPAREIL DE CHAUFFAGE

(30) Priority: 18.10.2012 ZA 201207849
(43) Date of publication of application: 26.08.2015
(73) Proprietor: Tenova South Africa (Pty) Ltd., 1619, Johannesburg (ZA)
(72) Inventor: JONKER, Petrus Johannes, 2193 Johannesburg (ZA); NOURSE, Randolph Bruce, 2196 Johannesburg (ZA); RINKER, Franklin George, Marco Island 34145 (US)
(74) Representative: Plasseraud IP
(86) International application number: PCT/IB2013/059444
(87) International publication number: WO 2014/060996

(56) References cited:
- DE-A1- 19 927 447
- GB-A- 2 015 714
- JP-A- S5 569 210
- JP-A- S56 142 810
- US-A- 3 836 131
- US-A- 4 188 022

## Description

### BACKGROUND TO THE INVENTION

THIS invention relates to a gas distributor for use in the heating apparatus. More particularly but not exclusively, the invention relates to a pre-heater for heating material prior to being conveyed to a smelting process, and to a heating gas distributor used in such heating apparatus.

It is generally accepted that shaft type counter flow gas / solid heat exchange is the most efficient means for the exchange of heat from or to a continuous free flowing solid stream. In this configuration a vertically rising stream of gas is brought into contact with a vertically descending stream of solids. Advantageously, smelting furnace off gas containing certain calorific compounds can be combusted and added to recirculating inert gasses in order to provide the heat transfer medium for heating the solid stream. The most efficient heating will take place when the solid stream exhibit plug flow characteristics, and when the heating gas is uniformly distributed through the free flowing bed of solids. The combination of the plug flow and uniform distribution will result in the most effective heat transfer between the between the heating gas and the solid stream.

Existing preheaters as described in GB 2 015 714 A and US 3 836 131 A typically comprises a vessel that is divided into a number of sections, being a feed zone where cold material is fed into the vessel, a gas zone, where the top gas from the preheating process is collected and extracted, an upper heating zone, where the material is heated by heating gas, and a lower heat zone, where the heated feed material is temporarily stored prior to being conveyed to the smelting apparatus. The gas is typically introduced into the upper heating zone by way of a gas distributor, many designs of which are already known in the art.

A number of shortcomings are associated with existing designs. A first shortcoming relate to the uneven distribution of heating gas through the solid stream, and hence in uneven heating flows. When designing a convective gas / solid heat exchange unit for preheating solid materials, particle segregation as the material enters the heating chamber is a critical factor to consider. Larger particles tend to be displaced to towards the outer walls of the heating zone, whereas smaller particles remain in the center of the pile. This segregation results in a disproportionate amount of gas to flow vertically upwardly along the walls of the vessel where the larger particles are present due to the reduced resistance. This then leads to the uneven distribution of the heating gas, and hence uneven heating flows. Existing gas distributors are not optimally designed to introduce the heating gas in a manner that aids uniform gas distribution. The geometrical design of existing gas distributors are also not necessarily ideal to aid in facilitating plug flow characteristics throughout the bed of solid materials. A further shortcoming of existing gas distributors is that the orientation and configuration of gas discharge apertures render the apertures prone to blockages and interference by solids from the downwardly moving solid stream.

Another shortcoming associated with existing preheating arrangements is that they generally comprise a singular large preheating vessel. This is not beneficial to maintaining the desired plug flow, because the tapered configuration of the conical discharge plays a significant part in slowing down the material draw down rate along the wall, whilst increasing the rate of draw down in the center of the vessel. The use of a single vessel also constitutes a risk in terms of system availability and downtime, and adversely impacts on plant operability and control due to the large volume of feed material to be preheated.

It is an object of the invention to provide a gas distributor for use in a heating apparatus that will at least partially alleviate the above disadvantages.

It is another object of the invention to provide a heating system, including at least one but preferably more than one heating apparatuses, which will at least partially alleviate the above disadvantages.

It is also an object of the invention to provide a heating system, including at least one but preferably more than one heating apparatuses, which will be a useful alternative to existing heating systems.

### SUMMARY OF THE INVENTION

The invention according to independent claim 1 provides a gas distribution arrangement, suitable for use in a heating apparatus for heating solid material.

The lower zone may be substantially conical, and more particularly may be in the form of an inverted cone.

There is provided for the operatively lower zone to comprise a plurality of discrete rings of reducing span being located at least partially below one another so as to form a stepped cone, with the gas outlet arrangement defined by annular gaps between adjacent rings of reducing span.

In one embodiment the rings are in the form of cylindrical rings that are circular in cross-section.

For the purposes of the specification the term "ring" should be interpreted to include any configuration where an object has a continuous sidewall, and the ring may for example have a circular, oval, square or rectangular profile.

The rings may have the same height, and may alternatively have different heights.

The operatively lower zone may consist of between 2 and 10 rings, and more preferably between 4 and 7 rings.

Opposing ends of the adjacent rings may at least partially overlap in order for the gas outlets to be in the form of vertically extending annular passages that are in use downwardly directed.

The rings making up the operatively lower zone are held in position by way of a ring supporting structure comprising rung support struts.

There is further provided for the gas distribution arrangement to include a cylindrical intermediate zone, with the gas inlet arrangement being in flow communication with the intermediate zone.

The gas inlet arrangement comprises at least one opening provided in the periphery of the intermediate zone, which opening is in flow communication with a gas connecting duct extending radially outwardly from the opening.

There is provided for the connecting duct also to function as a support member for in use supporting the gas distributing arrangement inside the heating apparatus.

Preferably the gas inlet arrangement comprises at least three circumferentially spaced constant area connecting ducts.

There is also provided for the upper zone of the gas distribution arrangement to be of tapering configuration, and more particularly to be of substantially conical configuration.

The upper zone is preferably in the form of a replaceable cone.

There is provided for the upper zone, intermediate zone and lower zone to be manufactured from a heat and abrasion resistant material.

According to a further aspect of the invention there is provided a heating apparatus suitable for use in heating solid material, the heating apparatus comprising: the gas distribution arrangement according to independent claims 1 to 6, a cylindrical vessel having an operatively upper feed storage zone, a gas collecting zone located below the feed storage zone, and an upper heating zone located below the gas collecting zone, characterized in that the upper feed zone and the upper heating zone are in flow communication by way of a plurality of feed ducts that extend between the upper feed storage zone and the upper heating zone through the gas collecting zone.

The heating apparatus also includes a lower heating zone located below the upper heating zone.

There is provided for the heating apparatus to include a gas distribution arrangement as described above.

The gas distribution arrangement is located in the upper heat zone.

There is provided for the heating apparatus to be in the form of a preheater for heating a mixture of lumpy and/or granular material prior to feeding the material to a smelting process.

According to a still further aspect of the invention there is provided a heating arrangement for use in heating solid material, the heating arrangement including at least two heating apparatuses as described above.

There is provided for the separate heating apparatuses of the heating arrangement to be connected at operatively lower zones thereof by way of feed conduits that in turn connects all the apparatuses to a target destination.

There is provided for the target destination to be a smelting process.

According to a still further aspect of the invention there is provided a unique control algorithm to control and prevent overheating of the feed material discharge temperature.

### BRIEF DESCRIPTION OF THE DRAWINGS

A preferred embodiment of the invention is described by way of a non-limiting example, and with reference to the accompanying drawings in which:

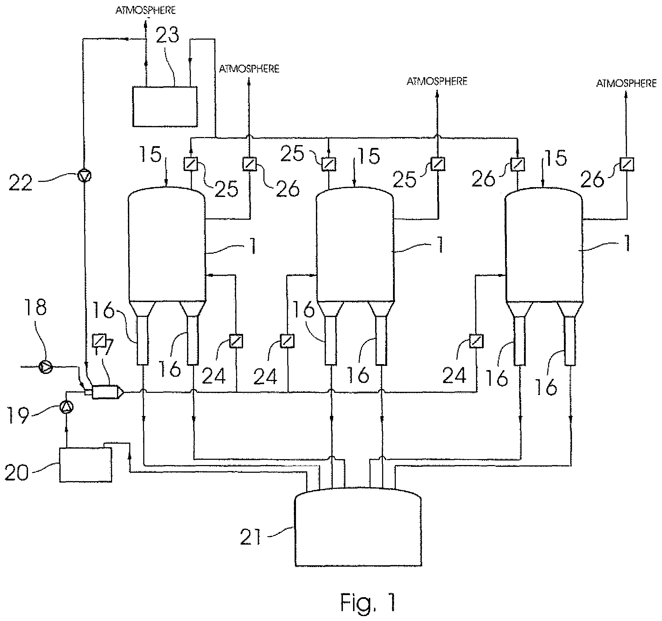

- Figure 1: is a schematic representation of a heating system including a plurality of heating apparatuses in accordance with one aspect of the invention, and with each heating apparatus also incorporating a gas distributor in accordance with another aspect of the invention ;
- Figure 2: is a cross-sectional side view of a heating apparatus in accordance with one embodiment of the invention;
- Figure 3: is a cross-sectional top plan view taken through A-A' in Figure 2, and showing the gas distributor in more detail; and
- Figure 4: is a cross-sectional side view of the gas distributor taken through B-B' in Figure 3.

### DETAILED DESCRIPTION OF INVENTION

Referring to the drawings, in which like numerals indicate like features, a non-limiting example of a gas heating system, apparatus and gas distributor is now described in more detail.

The invention relates to a system consisting of least two apparatuses or vessels (1) for heating a mixture of feed material for a smelting process (21).

The apparatus consists of at least two thermally insulated vessels (1), each comprising an upper feed storage zone (2) where cold feed material is stored, a gas collecting zone (4) where top gas from the heating process is accumulated and extracted, an upper heating zone (5) where feed material is heated by the hot gas and a lower heating zone (6) where the hot feed material flows continuously into the smelting process.

The gas collecting zone (4) and heating zones (5 & 6) are one large portion of the vessel with the upper feed storage zone (2) located directly above the gas collecting zone (4) and connected to the upper heating zone (5) through multiple feed ducts (3) extending through the gas collecting zone (4). All the zones therefore still form a single vessel. The multiple feed ducts (3) create a choke feed arrangement to ensure that material drawn from the bottom of the vessel is continuously replenished, maintaining a constant level of material in the vessel. The choke feed also provide a gas seal to prevent the escape of gas to the ambient surroundings. All zones are uniform in shape and preferably cylindrical, except the lower part of the lower heating zone (6) which is divided into at least two sections (30) that are connected to the smelting process (21) through at least one thermally insulated duct (16) per section.

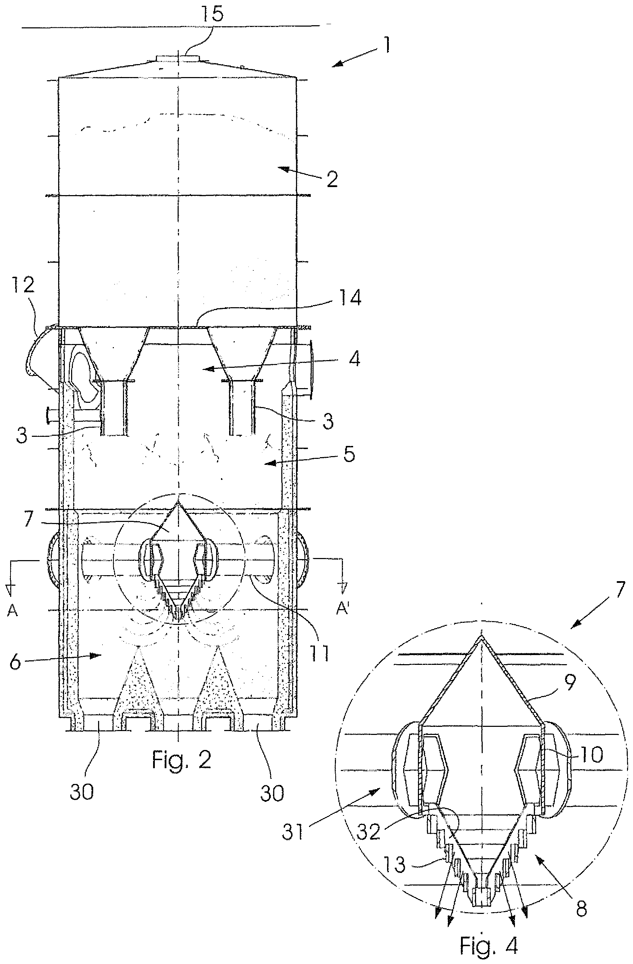

A gas distribution device (7) is provided in a lower part of the upper heating zone (5). This gas distribution device (7), best seen in Figure 4, consists of a cylindrical enclosure (10) having a gas inlet arrangement (31) and a gas outlet arrangement (8). The enclosure (10) includes an operatively upper zone and an operatively lower zone, with the gas outlet arrangement (8) provided in the operatively lower zone. The gas distribution device (7) is supported by at least three connecting ducts (11) which are connected to the upper heating zone (5) wall, and which extends radially outwardly from the gas distribution device (7) towards said wall. The ducts (11) are in flow communication with openings provided in the cylindrical enclosure.

The gas outlet arrangement of the gas distribution device (7) is in the form of a downwardly directed gas splitter (8). The hot gas enters the gas distribution device (7) radially through at least one of the three connecting ducts (11) and is directed downwardly by the gas splitter (8) into the feed material. The gas rises through the feed material increasing the temperature of the feed material as the hot gas rises. The position, configuration, and orientation of the gas splitter (8) also ensures that the gas is supplied as far as possible away from the wall of the vessel which means all the hot gas has to pass through the bed, and the escape of gas along the wall of the vessel is minimised. The upper and lower inverse conical shapes of the gas distribution device (7) also aids in maintaining plug flow through the vessel. In particular, the lower inverse conical section result in less friction, and hence flow interference, compared to prior art gas distributors.

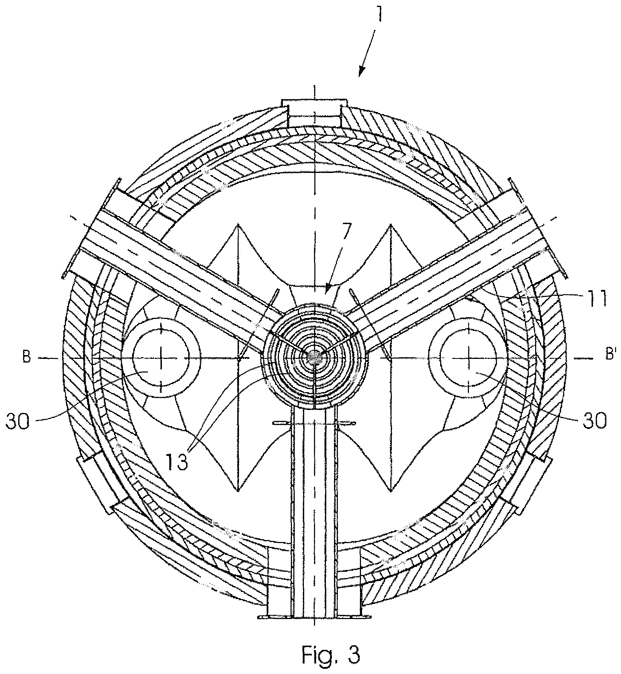

The gas distribution device (7), and more particularly the gas splitter (8), is described in more detail with reference to figures 2, 3 and 4. The gas splitter (8) of each gas distribution device (7) consists of internal support struts (32) that support a series of concentric heat and abrasion resistant ring elements, in this case in the form of short lengths of circular ducts (13) of reducing diameter that are mounted about a common centreline so as to form a stepped, inverted cone. Adjacent ring elements (13) are dimensioned in order for annular gaps to be formed therebetween. In addition, opposing ends of the adjacent rings may at least partially overlap in order for the gas outlets to be in the form of vertically extending annular passages that are in use downwardly directed. The height of the ring elements may be the same, or may vary.

A converging cone (9) is provided on top of the gas distribution device (7), and ensures that a true diverging-converging internal flow of solid materials along the centreline of the vessel is created.

The dimensions of the gas distribution device (7) are selected according to the capacity of each vessel, which in turn is selected based on the total capacity and geometry required. A suitable selection can be made by a person skilled in the art.

Although the multiple vessels (1) are normally positioned at a common level above the smelting process (21), certain vessels can be located at a different level if the feed arrangement and layout allows, or requires, it.

In use, each vessel (1) is filled with cold feed material through a port (15) in an upper end of the vessel. The cold feed material is stored in the upper feed storage zone (2) of the vessel, which is separated from the gas collecting zone (4) and heat zones (5 & 6) through a suitable tube sheet or floor (14), but connected through a multiple number of feed ducts (3) extending from the tube sheet or floor (14) downwards through the gas zone (3) to the upper heating zone (5). The upper feed storage zone (2) provides sufficient storage of unheated feed material to enable the constant draw down during normal operation or rapid draw down during the tapping of the smelting process (21). The material is fed under gravity through the feed ducts (3) into the upper heating zone (5) as the heated material in the lower heating zone (6) is extracted from the vessel (1) through the feed ducts (16) during the smelting process. The multiple feed chutes (3) thus provide a choke feed arrangement to ensure that gases present in the gas collecting (4) and heating (5 & 6) zones do not escape to the ambient surroundings.

The hot gas required for the preheating is a mixture of combusted CO gas or equivalent, and colder dilution gas. The CO gas supply (19) is normally the dust laden CO gas generated in the smelting process, which is then cleaned in either a dry or wet gas cleaning system (20) prior to being supplied under pressure to at least one combustion chamber (17) - the number of combustion chambers (17) does not necessarily have to correspond to the number of gas distribution devices (7) - where the CO gas is sub stoichiometrically combusted with ambient air (18) and mixed with colder dilution gas (22) from the pre heating gas cleaning plant (23), to regulate the hot gas temperature exiting the combustion chamber (17). This hot gas is conveyed through a duct network to each vessel. Upstream of each vessel, a regulation / shut off valve (24) is used to control the amount of hot gas supplied to the specific vessel (1). The ductwork at the vessel can act as manifold should more than one connecting duct (11) be used. The hot gas entering at least one of the connecting ducts (11) of the gas distribution device (7) is conveyed to the gas splitter (8) where the gas is fed into the heating vessel (1). The schematic cross section of the gas distribution device (7) as shown in figure 4 shows the gas flow exiting the gas splitter (8) of the gas distribution device (7) via the air passages created by the ring elements (13) of various diameters and heights.

The top gas exiting above the upper heat zone (5) is extracted through at least one exhaust port (12) located in the gas zone (4). The exhaust port (12) of each vessel is connected through a regulation / shut off valve (25) on each port (12) to a duct network leading up to at least one dry or wet pre-heating gas cleaning plant (23). A regulation / shut off valve (25) is used to control the exit gas temperature and pressure of the top gas. A portion of the cleaned gas exiting the pre heating gas cleaning plant/s (23) is either ducted to the combustion chamber to be used as colder dilution - as described in the above paragraph - or vented to atmosphere. When a dry pre-heating gas cleaning plant (23) is used, the portion of the cleaned gas used as dilution gas to the combustion chamber (17) is cooled down.

In the event of an over pressure or emergency condition in the gas zone (4) of a specific vessel (1), an emergency shut off valve (26) on each vessel (1) opens automatically to vent the gas through a stack to atmosphere.

A unique control algorithm maximises the power input to the pre heating module and ensures a steady feed material temperature to maintain a constant vessel burden upper temperature. This control methodology allows the power input to react rapidly to changes in the feed material feed rate. The feed material in the upper zone (measured by means of two or more thermocouples) is used as an input into the algorithm referred to as mode 1. As alternative i.e. mode 2, the waste gas stream temperature is used as an input into the algorithm to regulate the power input. In both modes, controls are in place to ensure that feed material discharge temperature from each vessel is controlled to prevent overheating.

The advantages of this method where a number of smaller diameter vessels are used instead of prior art methods where a single large vessel is used are:
- Achieving more uniform heating through the plug flow of the feed material flowing vertically downward as the tapering of the conical discharge plays a smaller role to slow the material draw down rate along the wall and increasing the rate of draw down in the centre of the vessel;
- Increased system availability although at reduced capacity if one of the multiple vessels is to be taken off line for repairs; and
- Improved plant operability and control due to smaller volumes of feed material to be pre heated, lower capital investment in smelter building.

The advantages of the new gas distributor design include:
- More uniform gas distribution due to the gas being introduced over a large area and at different elevations;
- Less interference with the flow of the solid medium due the orientation of the distribution apertures; and
- Less restriction and blocking of flow passages due to the orientation of the downwardly directed annular flow passages.

It will be appreciated that the above is only one embodiment of the invention and that there may be many variations without departing from the spirit and/or the scope of the invention.

## Claims

1. A gas distribution arrangement (7), suitable for use in a heating apparatus for heating particulate material, the gas distribution arrangement including:
an enclosure having a gas inlet arrangement (31) and a gas outlet arrangement;
the enclosure including an operatively upper zone, an intermediate zone and an operatively lower zone, with the gas outlet arrangement provided in the operatively lower zone; with the operatively lower zone being of a downwardly tapering, converging configuration;
**characterised in that** the operatively lower zone comprises a plurality of discrete rings (13) of reducing span being located at least partially below one another so as to form a stepped cone, with the gas outlet arrangement defined by vertically extending annular passages between adjacent rings of reducing span, wherein the passages are in use downwardly directed.

2. The gas distribution arrangement of claim 1 in which the lower zone is substantially conical.

3. The gas distribution arrangement of claim 2 in which the lower zone is in the form of an inverted cone.

4. The gas distribution arrangement of any one of the preceding claims in which the gas distribution arrangement includes a cylindrical intermediate zone, with the gas inlet arrangement being in flow communication with the intermediate zone.

5. The gas distribution arrangement of claim 4 in which the gas inlet arrangement comprises at least one opening provided in the periphery of the intermediate zone, which opening is in flow communication with a gas connecting duct extending radially outwardly from the opening.

6. The gas distribution arrangement of any one of the preceding claims in which the upper zone of the gas distribution arrangement is of tapering configuration, and more particularly of a substantially conical configuration.

7. A heating apparatus suitable for use in heating particulate material, the heating apparatus comprising:
a cylindrical vessel having an operatively upper feed storage zone, a gas collecting zone located below the feed storage zone, and an upper heating zone located below the gas collecting zone, wherein the upper feed storage zone and the upper heating zone are in flow communication by way of a plurality of feed ducts that extend between the upper feed storage zone and the upper heating zone through the gas collecting zone;
**characterised in that** a gas distribution arrangement is located in the upper heating zone of the heating apparatus, wherein the gas distribution arrangement is the gas distribution arrangement as claimed in any one of claims 1 to 6.

8. The heating apparatus of claim 7 in which the heating apparatus is in the form of a preheater for heating a mixture of lumpy and/or granular material prior to feeding the material to a smelting process.

9. A heating arrangement for use in heating solid material, the heating arrangement including at least two heating apparatuses as claimed in any one of claims 7 or 8.

10. The heating arrangement of claim 9 in which the heating apparatuses of the heating arrangement are connected at operatively lower zones thereof by way of feed conduits that in turn connects all the apparatuses to a target destination.

11. The heating arrangement of claim 10 in which the target destination is a smelting process.

## Patentansprüche

1. Gasverteilungsanordnung (7), die zur Verwendung in einer Erwärmungsvorrichtung zum Erwärmen von partikulärem Material geeignet ist, wobei die Gasverteilungsanordnung Folgendes umfasst:
ein Gehäuse mit einer Gaseinlassanordnung (31) und einer Gasauslassanordnung;
wobei das Gehäuse einen funktionsmäßig oberen Bereich, einen mittleren Bereich und einen funktionsmäßig unteren Bereich umfasst, wobei die Gasauslassanordnung in dem funktionsmäßig unteren Bereich vorgesehen ist; wobei der funktionsmäßig untere Bereich sich nach unten verjüngend und konvergierend ausgebildet ist;
**dadurch gekennzeichnet, dass** der funktionsmäßig untere Bereich eine Vielzahl von einzelnen Ringen (13) mit kleiner werdendem Abstand umfasst, die sich wenigstens teilweise untereinander befinden, um einen gestuften Konus zu bilden, wobei die Gasauslassanordnung durch vertikal verlaufende ringförmige Kanäle zwischen benachbarten Ringen mit kleiner werdendem Abstand definiert ist, wobei die Kanäle im Gebrauch nach unten gerichtet sind.

2. Gasverteilungsanordnung nach Anspruch 1, bei welcher der untere Bereich im Wesentlichen konisch ist.

3. Gasverteilungsanordnung nach Anspruch 2, bei welcher der untere Bereich in Form eines umgekehrten Konus vorliegt.

4. Gasverteilungsanordnung nach einem der vorhergehenden Ansprüche, bei der die Gasverteilungsanordnung einen zylindrischen mittleren Bereich umfasst, wobei die Gaseinlassanordnung mit dem mittleren Bereich in Strömungsverbindung steht.

5. Gasverteilungsanordnung nach Anspruch 4, bei der die Gaseinlassanordnung mindestens eine im Randbereich des mittleren Bereichs vorgesehene Öffnung umfasst, die mit einem sich von der Öffnung radial nach außen erstreckenden Gasverbindungskanal in Strömungsverbindung steht.

6. Gasverteilungsanordnung nach einem der vorhergehenden Ansprüche, bei welcher der obere Bereich der Gasverteilungsanordnung spitz zulaufend ausgebildet ist und insbesondere im Wesentlichen konisch ausgebildet ist.

7. Erwärmungsvorrichtung, die zur Verwendung beim Erwärmen von partikulärem Material geeignet ist, wobei die Erwärmungsvorrichtung Folgendes umfasst:
einen zylindrischen Behälter mit einem funktionsmäßig oberen Einsatzmaterialbereich, einem unter dem Einsatzmaterialbereich befindlichen Gassammelbereich und einem unter dem Gassammelbereich befindlichen oberen Erwärmungsbereich, wobei der obere Einsatzmaterialbereich und der obere Erwärmungsbereich über eine Vielzahl von Zuführkanälen in Strömungsverbindung stehen, die sich zwischen dem oberen Einsatzmaterialbereich und dem oberen Erwärmungsbereich durch den Gassammelbereich erstrecken;
**dadurch gekennzeichnet, dass** sich eine Gasverteilungsanordnung in dem oberen Erwärmungsbereich der Erwärmungsvorrichtung befindet, wobei es sich bei der Gasverteilungsanordnung um die Gasverteilungsanordnung nach einem der Ansprüche 1 bis 6 handelt.

8. Erwärmungsvorrichtung nach Anspruch 7, bei der die Erwärmungsvorrichtung in Form eines Vorwärmers zum Erwärmen einer Mischung von stückigem und/oder körnigem Material vor der Zuführung des Materials zu einem Schmelzvorgang vorliegt.

9. Erwärmungsanordnung zur Verwendung beim Erwärmen von festem Material, wobei die Erwärmungsanordnung mindestens zwei Erwärmungsvorrichtungen nach einem der Ansprüche 7 oder 8 umfasst.

10. Erwärmungsanordnung nach Anspruch 9, bei der die Erwärmungsvorrichtungen der Erwärmungsanordnung in ihren funktionsmäßig unteren Bereichen über Zuführleitungen verbunden sind, die wiederum alle Vorrichtungen mit einem Zielbereich verbinden.

11. Erwärmungsanordnung nach Anspruch 10, bei welcher der Zielbereich ein Schmelzvorgang ist.

## Revendications

1. Agencement de distribution de gaz (7), approprié pour être utilisé dans un appareil de chauffage pour chauffer une matière particulaire, l'agencement de distribution de gaz incluant :
une enceinte comportant un agencement d'entrée de gaz (31) et un agencement de sortie de gaz ;
l'enceinte incluant une zone fonctionnellement supérieure, une zone intermédiaire et une zone fonctionnellement inférieure, l'agencement de sortie de gaz étant situé dans la zone fonctionnellement inférieure ; la zone fonctionnellement inférieure étant d'une configuration convergente rétrécissant vers le bas ;
**caractérisé en ce que** la zone fonctionnellement inférieure comprend une pluralité d'anneaux distincts (13) d'envergure diminuante situés au moins partiellement les uns sous les autres de manière à former un cône étagé, l'agencement de sortie de gaz étant défini en étendant verticalement des passages annulaires entre des anneaux d'envergure diminuante adjacents, dans lequel les passages sont orientés vers le bas lors de l'utilisation.

2. Agencement de distribution de gaz selon la revendication 1 dans lequel la zone inférieure est sensiblement conique.

3. Agencement de distribution de gaz selon la revendication 2 dans lequel la zone inférieure se présente sous la forme d'un cône inversé.

4. Agencement de distribution de gaz selon l'une quelconque des revendications précédentes dans lequel l'agencement de distribution de gaz inclut une zone intermédiaire cylindrique, l'agencement d'entrée de gaz étant en communication d'écoulement avec la zone intermédiaire.

5. Agencement de distribution de gaz selon la revendication 4 dans lequel l'agencement d'entrée de gaz comprend au moins une ouverture située dans la périphérie de la zone intermédiaire, laquelle ouverture est en communication d'écoulement avec un conduit de raccordement de gaz s'étendant radialement vers l'extérieur depuis l'ouverture.

6. Agencement de distribution de gaz selon l'une quelconque des revendications précédentes dans lequel la zone supérieure de l'agencement de distribution de gaz est de configuration à rétrécissement, et plus particulièrement d'une configuration sensiblement conique.

7. Appareil de chauffage approprié pour être utilisé pour chauffer une matière particulaire, l'appareil de chauffage comprenant :
une cuve cylindrique présentant une zone de stockage d'alimentation fonctionnellement supérieure, une zone de collecte de gaz située sous la zone de stockage d'alimentation et une zone de chauffage supérieure située sous la zone de collecte de gaz, dans lequel la zone de stockage d'alimentation supérieure et la zone de chauffage supérieure sont en communication d'écoulement par le biais d'une pluralité de conduits d'alimentation qui s'étendent entre la zone de stockage d'alimentation supérieure et la zone de chauffage supérieure à travers la zone de collecte de gaz ;
**caractérisé en ce qu'**un agencement de distribution de gaz est situé dans la zone de chauffage supérieure de l'appareil de chauffage, dans lequel l'agencement de distribution de gaz est l'agencement de distribution de gaz selon l'une quelconque des revendications 1 à 6.

8. Appareil de chauffage selon la revendication 7 dans lequel l'appareil de chauffage se présente sous la forme d'un dispositif de préchauffage pour chauffer un mélange de matière particulaire et/ou en bloc avant d'acheminer la matière jusqu'à un processus de fusion.

9. Agencement de chauffage à utiliser pour chauffer une matière solide, l'agencement de chauffage incluant au moins deux appareils de chauffage selon l'une quelconque des revendications 7 ou 8.

10. Agencement de chauffage selon la revendication 9 dans lequel les appareils de chauffage de l'agencement de chauffage sont raccordés au niveau de zones fonctionnellement inférieures de ceux-ci par le biais de conduits d'alimentation qui, quant à eux, raccordent tous les appareils à une destination cible.

11. Agencement de chauffage selon la revendication 10 dans lequel la destination cible est un processus de fusion.
